# EUROPEAN PATENT APPLICATION

(11) **EP 3 739 202 A1**
(43) Date of publication of application: **18.11.2020**
(21) Application number: 19174877.1
(22) Date of filing: 16.05.2019
(51) Int. Cl.: F03D 13/25, F03D 7/02, F03D 7/04, F03D 1/02, F03D 9/00, B63B 35/44

(54) **FLOATING FOUNDATION FOR AN OFFSHORE WIND TURBINE**

(71) Applicant: Siemens Gamesa Renewable Energy A/S, 7330 Brande (DK)
(72) Inventor: Jensen, Daniel Kai, 8700 Horsens (DK); Rai, Sudhanshu, 7430 Ikast (DK)
(74) Representative: Aspacher, Karl-Georg

(57) **Abstract**

The invention describes a floating foundation (1) for supporting an offshore wind turbine assembly (2, 2a, 2b, 2c), comprising a mounting interface (12) for mounting a wind turbine tower (21) to the floating foundation (1) and an anchor arrangement (18) for anchoring the floating foundation (1) to the seabed (B). The inventive floating foundation is characterized by an underwater yaw system (13) comprising a plurality of marine propeller units (10) mounted to the floating foundation (1) to facilitate a rotation (Y) of the offshore wind turbine assembly (2) about a vertical axis (V_{R}) and/or to effect a lateral displacement (D) of the offshore wind turbine assembly (2, 2a, 2b, 2c); and a marine propeller controller (130) configured to actuate one or more marine propeller units (10).

## Description

The invention describes a floating foundation for an offshore wind turbine; an offshore wind turbine assembly; an offshore wind turbine array; and a method of controlling an underwater yaw system of an offshore wind turbine assembly.

### Background

Offshore wind turbines have become an increasingly important source of renewable energy. A significant portion of the costs of installing a wind park is incurred by the need to provide foundations for the wind turbines. For a relatively shallow location in a depth of a few tens of meters, the costs may be tolerable. However, it can be prohibitively expensive to provide a foundation in deeper waters. The concept of a floating foundation has been proposed to overcome the difficulties of providing foundations.

For a wind turbine supported by a fixed foundation, a yaw system between the nacelle and tower is used to turn the nacelle and therefore the aerodynamic rotor. Known types of floating foundation include tendons or other tensioning means that are used to anchor the floating foundation to prevent it from turning, so that a conventional yaw system can be used to turn the aerodynamic rotor into the wind.

The object of the invention is to provide an alternative way of yawing a wind turbine that is supported by a floating foundation.

This object is achieved by the floating foundation of claim 1; by the offshore wind turbine assembly of claim 7; by the offshore wind turbine array of claim 12; and by the method of claim 13 of controlling the underwater yaw system of such an offshore wind turbine assembly.

According to the invention, the floating foundation for supporting an offshore wind turbine assembly comprises a mounting interface for mounting a wind turbine tower to the floating foundation and an anchor arrangement for anchoring the floating foundation to the seabed. The floating foundation is characterized by an underwater yaw system that comprises a plurality of marine propeller units mounted to the floating foundation to facilitate a rotation of the offshore wind turbine assembly about a vertical axis, and a marine propeller controller configured to actuate one or more marine propeller units to effect a desired rotation. Since the floating foundation according to the invention allows the tower to rotate about its vertical axis, i.e. to yaw about its vertical axis, the inventive floating foundation may also be referred to as a "yawing floating foundation".

An advantage of the yawing floating foundation according to the invention is that the offshore wind turbine assembly does not need to implement a yaw system between nacelle and tower. To turn the aerodynamic rotor of a wind turbine into the wind, the floating foundation - and therefore the entire wind turbine assembly - is yawed about a vertical axis of rotation. This is done by actuating the marine propeller units to effect the desired rotation. It may be assumed that the anchor arrangement is realised to allow the floating foundation to rotate about its vertical axis, and

Another advantage of the floating foundation according to the invention is that a wind turbine assembly can be moved to a different position. This can lead to significant improvements in performance in the case of an offshore array of floating wind turbines, because any wind turbine that is affected by the wake of another wind turbine can be moved to a better position.

According to the invention, the offshore wind turbine assembly comprises an embodiment of the inventive floating foundation, and a wind turbine assembly supported by a tower mounted to the floating foundation.

According to the invention, the method of controlling the underwater yaw system of an offshore wind turbine assembly according to the invention comprises the steps of determining the wind direction; determining a yaw error on the basis of the wind direction; and actuating the marine propeller units to effect a rotation of the offshore wind turbine assembly about its vertical axis to minimize the yaw error.

According to the invention, the offshore wind turbine array comprises a plurality of offshore wind turbine assemblies according to the invention, a means of determining the actual positions of each wind turbine assembly in the array, and a wind monitor module configured to determine the actual wind direction. The offshore wind turbine array further comprises a position management module configured to determine the optimum position for a wind turbine assembly in the array on the basis of its actual position, the actual positions of its array neighbours, and the actual wind speed; and a control signal generator configured to generate control signals for the marine propeller controller of a wind turbine assembly on the basis of the optimum position for that wind turbine assembly.

Particularly advantageous embodiments and features of the invention are given by the dependent claims, as revealed in the following description. Features of different claim categories may be combined as appropriate to give further embodiments not described herein.

A "wind turbine" in the context of the application refers to a generator housed in a nacelle, with an aerodynamic rotor that excites the generator to produce electricity. The wind turbine is usually mounted onto a tower at some height above the water level. Most offshore wind turbines are realised as horizontal axis wind turbines, since this design permits a relatively large aerodynamic rotor and a correspondingly high power yield. In the following, without restricting the invention in any way, it may be assumed that a wind turbine is a horizontal axis wind turbine, i.e. its aerodynamic rotor rotates about an essentially horizontal axis. As will be known to the skilled person, the rotational axis may by tilted slightly to prevent the rotor blades of the aerodynamic rotor from colliding with the tower. This preventive measure is usually applied when the rotor blades are long, since long rotor blades tend to bend more easily.

An offshore wind turbine assembly may comprise a single wind turbine mounted on a tower supported by the floating foundation. Alternatively, in a preferred embodiment of the invention, an offshore wind turbine assembly comprises a plurality of wind turbines, one of which is mounted onto a central tower supported by the floating foundation. One or more additional wind turbines can be mounted on "branches" extending outward from the tower. In such an assembly, the rotation axes of the wind turbines are preferably essentially parallel, so that the aerodynamic rotors all face in the same direction.

Preferably, the marine propeller arrangement of an offshore wind turbine assembly is also configured to effect a translation, i.e. a lateral displacement of the offshore wind turbine assembly. For example, a "square" arrangement of four marine propeller units can be controlled so that two oppositely arranged marine propeller units are driven at the same time to displace water in the same direction. Of course, by issuing appropriate control signals, the marine propeller controller can actuate the propeller units to effect a rotation concurrently with a translation.

A floating foundation can comprise a pedestal that is mostly submerged, and any suitable means of giving buoyancy to the pedestal and the supported wind turbine assembly. In a preferred embodiment of the invention, the floating foundation comprises a symmetrical arrangement of at least two marine propeller units, preferably at least three marine propeller units mounted to the pedestal of the floating foundation, below the water level.

Preferably, a marine propeller unit is realised so that the propeller can rotate in either direction about its rotational axis. In this way, the marine propeller unit can generate thrust in one direction or in the opposite direction, depending on how it is controlled.

In a preferred embodiment of the invention, a marine propeller unit comprises a propulsion unit such as an underwater thruster. Such a propulsion unit can be powered by an external power source.

Alternatively or in addition, a marine propeller unit comprises a tidal turbine such as a shrouded turbine. An advantage of implementing tidal turbines is that these do not need an external power source. Instead, the water current causes the propeller of a tidal turbine to rotate, thus converting the kinetic energy of the water current into electricity. In a further preferred embodiment of the invention, therefore, the electricity generated by a tidal turbine is used to power auxiliaries of the wind turbine assembly. Alternatively or in addition, the electricity generated by a tidal turbine may be fed into the grid.

The floating foundation may be anchored or tethered in any suitable way to the marine floor or seabed. In a preferred embodiment of the invention, the anchor arrangement comprises at least one anchor weight resting on the seabed, a cable connecting the anchor weight to the floating foundation, and a winch for adjusting the wire length. For example, two or three anchor weights may be arranged on the seabed. From each anchor weight, a cable extends to a corresponding winch attached to the floating foundation. A translation or lateral displacement of the floating foundation may be facilitated by actuating the winches accordingly, for example to pay out cable from one winch and to wind cable onto another winch. The translation or lateral displacement may then be completed by actuating the marine propeller units accordingly.

In a preferred embodiment of the invention, an offshore wind turbine assembly comprises a tracking means such as a data logger, a data pusher, a GPS tracker, etc., configured to establish the position of the offshore wind turbine assembly. This information can be used for example by a park controller of a wind park to optimize the positions of the wind turbine assemblies in the wind park. The aerodynamic rotor of a wind turbine will generate a wake that can have a detrimental impact on the performance of any "downwind" wind turbines. To avoid such performance losses, the inventive ... method comprises the steps of determining the position of the floating foundation of an offshore wind turbine assembly relative to other offshore wind turbines; and actuating the marine propeller units of that offshore wind turbine assembly to effect a lateral displacement.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 shows an embodiment of the inventive offshore wind turbine assembly;
Fig 2 shows a view from above onto the floating foundation of the offshore wind turbine assembly of Fig 1;
Fig 3 shows a further embodiment of the inventive offshore wind turbine assembly;
Fig 4 shows an offshore array with a plurality of offshore wind turbine assemblies.

In the diagrams, like numbers refer to like objects throughout. Objects in the diagrams are not necessarily drawn to scale.

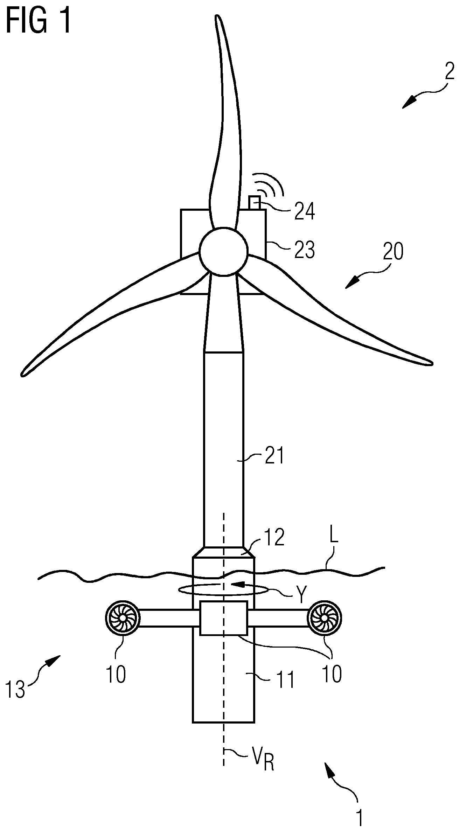

Fig 1 shows an embodiment of the inventive floating foundation 1 for supporting an offshore wind turbine assembly 2. The diagram shows a single wind turbine 20 mounted on a tower 21 that is supported by the floating foundation 1. The tower is secured to the floating foundation 1 by means of a mounting interface 12. Any suitable apparatus and technology can be implemented to give buoyancy to the floating foundation 1.

An underwater yaw system 13 comprises a plurality of marine propeller units 10 below the water level L, and mounted symmetrically about a pedestal 11 of the floating foundation 1. The marine propeller units 10 can be controlled to generate thrust to effect a rotation Y so that the floating foundation is yawed about its vertical axis V_{R}.

A tracking means 24 such as a data logger, a data pusher, a GPS tracker, etc. is mounted to the wind turbine 20 (for example on the nacelle 23 as shown here), and can relay the position coordinates of the assembly 2 to a recipient, for example to a park controller.

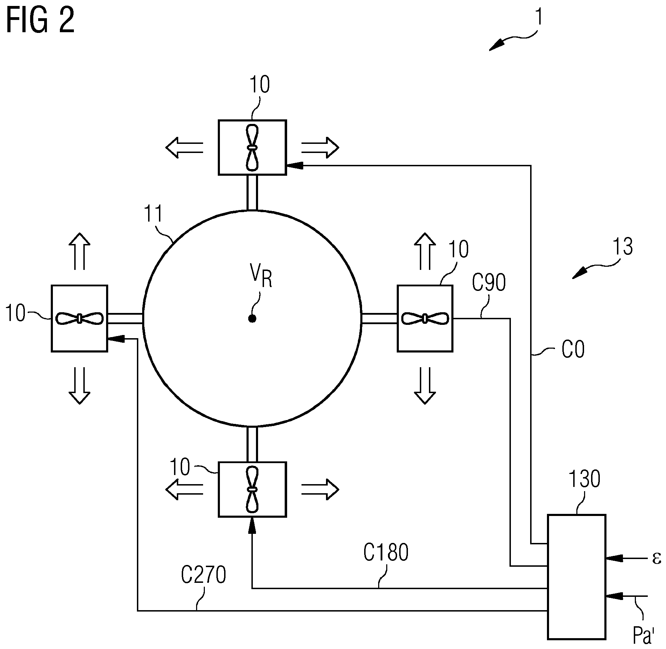

Fig 2 shows a simplified view from above onto the floating foundation 1 of Fig 1. The diagram shows the pedestal 11 and a symmetric "square" arrangement of four marine propeller units 10, in this case four shrouded tidal turbines 10. Here, the marine propeller units 10 are mounted at 0°, 90°, 180° and 360° about the vertical pedestal 11, whereby the 0° position can be arbitrarily chosen. Each tidal turbine 10 can generate thrust in two opposite directions as indicated by the arrow pairs in each case. In this exemplary embodiment, a marine propeller controller 130 is configured to issue control signals C0, C90, C180, C270 to each tidal turbine 10 in response to a yaw error ε which can be provided by a wind turbine controller or a wind park controller, for example. The wind turbine assembly will be optimally positioned when the yaw error ε approaches zero. The marine propeller controller 130 can compute appropriate control signals C0, C90, C180, C270 so that the tidal turbines 10 collectively yaw the floating foundation 1 to a position in which the aerodynamic rotor of the wind turbine 20 is facing into the wind.

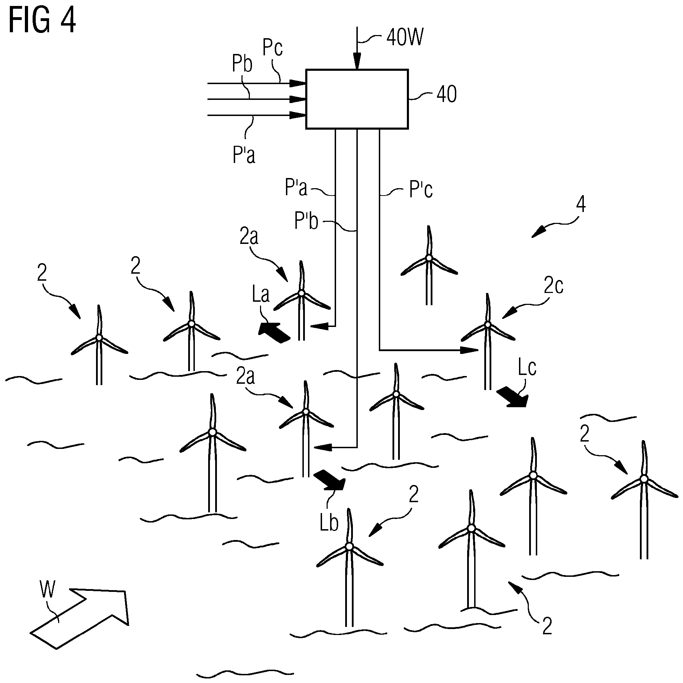

The diagram also shows a position input Pa' for that floating foundation 1. This position input Pa' can be provided by a park controller, for example, as will be explained with the aid of Fig 4. The position input Pa' can be in the form of offset X and Y values, for example "minus 10 m in the x-direction and plus 7 m in the y-direction". The marine propeller controller 130 can then compute appropriate control signals C0, C90, C180, C270 so that the tidal turbines 10 collectively displace the floating foundation 1 to the new position.

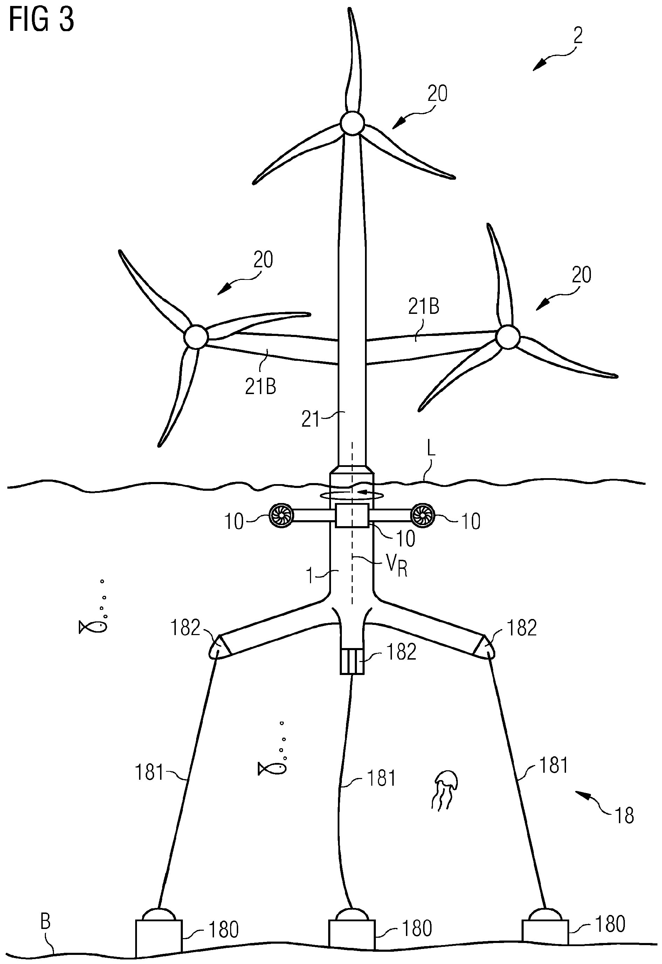

Fig 3 shows a further embodiment of the inventive floating foundation 1 for supporting an offshore wind turbine assembly 2. Here, the wind turbine assembly 2 comprises three wind turbines 20, with one wind turbine 20 mounted to a central supporting tower 21, and two additional wind turbines 20 supported by "branches" 21B extending outward from the tower 21.

The diagram also shows an anchor arrangement 18, with several anchor weights 180 resting on the seabed B. Each anchor weight 180 is connected by cable 181 to a winch 182. By unwinding cable from one or more winches while winding cable back onto one or more other winches, the lateral position of the floating foundation 1 can be adjusted. The cables can be left with a sufficient amount of slack, so that the marine propellers 10 can be actuated to alter the position of the floating foundation 1 within the range permitted by the cable slack. In this way, the floating foundation 1 can quickly be moved from one position to a more optimal position, for example to remove its wind turbine assembly 2 out of the wake of an upwind wind turbine.

Fig 4 shows an offshore array 4 with many wind turbines 2. A park controller 40 receives position information (e.g. GPS coordinates) from the wind turbine assemblies 2 of the array 4. Here, three exemplary wind turbine assemblies 2a, 2b, 2c are indicated by way of example. The park controller 40 receives their positions Pa, Pb, Pc (as well as the positions of all the other wind turbine assemblies 2) and a wind direction reading 40W, which can be supplied by a meteorological station as will be known to the skilled person. With this information, the park controller 40 can identify any wind turbine that is affected by the wake of an upstream wind turbine assembly, or any wind turbine assembly that is generating a wake that affects a downstream wind turbine. The park controller 40 can then compute more optimal positions Pa', Pb', Pc' for the affected wind turbine assemblies 2a, 2b, 2c. The updated Pa', Pb', Pc' are sent to the appropriate marine propeller controllers, which convert the information to control signals as explained in Fig 2 above, resulting in lateral displacements La, Lb, Lc as indicated in this exemplary scenario.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A floating foundation (1) for supporting an offshore wind turbine assembly (2, 2a, 2b, 2c), comprising
- a mounting interface (12) for mounting a wind turbine tower (21) to the floating foundation (1);
- an anchor arrangement (18) for anchoring the floating foundation (1) to the seabed (B);
**characterized by**
an underwater yaw system (13) comprising
- a plurality of marine propeller units (10) mounted to the floating foundation (1) to facilitate a rotation (Y) of the offshore wind turbine assembly (2, 2a, 2b, 2c) about a vertical axis (V_{R}) and/or to effect a lateral displacement (La, Lb, Lc) of the offshore wind turbine assembly (2, 2a, 2b, 2c); and
- a marine propeller controller (130) configured to actuate one or more marine propeller units (10).

2. A floating foundation according to claim 1, wherein the floating foundation (1) comprises a symmetrical arrangement of at least two marine propeller units (10), preferably at least three marine propeller units (10) mounted to the floating foundation (1).

3. A floating foundation according to claim 1 or claim 2, wherein a marine propeller unit (10) comprises an underwater thruster.

4. A floating foundation according to any of the preceding claims, wherein a marine propeller unit (10) comprises a tidal turbine.

5. A floating foundation according to claim 4, wherein a tidal turbine is configured to generate electricity to power auxiliaries of the wind turbine assembly (2).

6. A floating foundation according to any of the preceding claims, wherein the anchor arrangement (18) comprises at least one anchor weight (180) resting on the seabed (B), a cable (181) connecting the anchor weight (180) to the floating foundation (1), and a winch (182) for adjusting the wire length.

7. An offshore wind turbine assembly (2, 2a, 2b, 2c) comprising
- a floating foundation (1) according to any of claims 1 to 6; and
- a number of wind turbines (20) supported by a tower (21) mounted to the floating foundation (1).

8. An offshore wind turbine assembly according to claim 7, wherein a wind turbine (20) comprises a generator and a horizontal axis aerodynamic rotor for driving the generator.

9. An offshore wind turbine assembly according to claim 7 or claim 8, wherein the offshore wind turbine assembly (2, 2a, 2b, 2c) comprises a plurality of wind turbines (20) supported by a central tower (21) mounted to the floating foundation (1) .

10. An offshore wind turbine assembly according to any of claims 7 to 9, wherein the rotation axes of the plurality of wind turbines (20) are essentially parallel.

11. An offshore wind turbine assembly according to any of claims 7 to 10, comprising a tracking means (24) configured to establish the position of the offshore wind turbine assembly (2, 2a, 2b, 2c).

12. An offshore wind turbine array (4) comprising
- a plurality of offshore wind turbine assemblies (2, 2a, 2b, 2c) according to claims 7 to 11;
- a position tracking means (24) configured to determine the actual positions (Pa, Pb, Pc) of wind turbine assemblies (2a, 2b, 2c) in the array (4);
- a wind monitoring means configured to determine the actual wind direction (40W);
- a position management module (40) configured to determine the optimum position (Pa', Pb', Pc') for a wind turbine assembly (2a, 2b, 2c) in the array (4) on the basis of its actual position (Pa, Pb, Pc), the actual positions of its array neighbours, and the actual wind speed (40W); and to forward the optimum position (Pa', Pb', Pc') of a wind turbine assembly (2a, 2b, 2c) to the marine propeller controller (130) of that wind turbine assembly (2a, 2b, 2c).

13. A method of controlling the underwater yaw system (13) of an offshore wind turbine assembly (2, 2a, 2b, 2c) according to any of claims 7 to 11, which method comprises the steps of
- determining the wind direction;
- determining a yaw error (ε) on the basis of the wind direction; and
- actuating the marine propeller units (10) to effect a rotation (Y) of the offshore wind turbine assembly (2, 2a, 2b, 2c) about its vertical axis (V_{R}) to minimize the yaw error (ε).

14. A method according to claim 13, comprising additional steps of
- determining the position of the floating foundation (1) relative to other offshore wind turbine assemblies (2, 2a, 2b, 2c); and
- actuating the marine propeller units (10) to effect a lateral displacement of the offshore wind turbine assembly (2, 2a, 2b, 2c).
